# EUROPEAN PATENT APPLICATION

(11) **EP 4 585 047 A1**
(43) Date of publication of application: **16.07.2025**
(21) Application number: 24834592.8
(22) Date of filing: 05.11.2024
(51) Int. Cl.: A22B 5/00, A22B 5/20, A22C 17/02, A22C 17/00

(54) **ROBOT TOOL SYSTEM FOR BISECTING SLAUGHTERED ANIMAL**

(30) Priority: 29.11.2023 KR 20230169721
(71) Applicant: Robos Co.,Ltd, Daegu 43018 (KR)
(72) Inventor: The designation of the inventor has not yet been filed
(74) Representative: Germain Maureau
(86) International application number: PCT/KR2024/017313
(87) International publication number: WO 2025/116338

(57) **Abstract**

One embodiment of the present invention provides a robot tool system (1000) for bisecting a slaughtered animal, which includes a first main body part (100) having a rotary saw blade (110) that cuts a slaughtered animal, a power supply part (300) configured to provide power to the rotary saw blade, a front roller fixing part (400) that is coupled to a lower portion of the first main body part and presses and supports an abdomen of the slaughtered animal, a second main body part (200) coupled to the first main body part by a rotational shaft (120) and having a main cylinder (130), and a rear roller fixing part (500) that is coupled to the second main body part and presses and supports a back of the slaughtered animal, wherein the second main body part is rotated with respect to the first main body part about the rotational shaft by operating the main cylinder.

## Description

### [Technical Field]

The present invention relates to a robot tool system for bisecting a slaughtered animal, and more specifically, to a robot tool system for automatically bisecting a slaughtered animal.

### [Background Art]

Major processes performed in a slaughterhouse include a process of bisecting a slaughtered animal.

In this way, the process of bisecting a carcass that bisects a slaughtered animal, for example, bisects the slaughtered animal along the center of the coccyx (tail bone), the sacrum, the coccyx (lumbar vertebrae), the thoracic vertebrae (back bone), and the cervical vertebrae (neck bone) to have two half-carcasses that are bilaterally symmetrical.

Conventionally, when performing the process of bisecting a carcass, a worker directly uses a chainsaw to bisect the slaughtered animal. However, when the worker bisects the slaughtered animal using the chainsaw, there is a problem that the result of the work varies depending on the worker's skill level. That is, there is a problem that the commercial value of the slaughtered animal varies depending on the worker.

In addition, due to the nature of the chainsaw, various foreign substances in addition to flesh separated from the slaughtered animal can stick to the chainsaw during the process of bisecting a slaughtering animal, thereby causing the proliferation of microorganisms. In this way, when microorganisms proliferate on the chainsaw, the dressed carcass subjected to the half carcass can rot.

In addition, since the worker needs to repeatedly hold the chainsaw and perform the process of bisecting a carcass, he or she can suffer from musculoskeletal disorders.

Accordingly, there is a need for various research and development for a robot tool system for automatically bisecting a slaughtered animal instead of a manual work.

### [Disclosure]

### [Related Art Document]

### [Patent Document]

(Patent Document 1) Korean Utility Model Registration No. 20-0288840 (2002.08.30)

### [Technical Problem]

The present invention is directed to providing a robot tool system for automatically bisecting a slaughtered animal.

### [Technical Solution]

To achieve the object, one embodiment of the present invention provides a robot tool system for bisecting a slaughtered animal, which includes a first main body part having a rotary saw blade that cuts a slaughtered animal, a power supply part configured to provide power to the rotary saw blade, a front roller fixing part that is coupled to a lower portion of the first main body part and presses and supports an abdomen of the slaughtered animal, a second main body part coupled to the first main body part by a rotational shaft and having a main cylinder, and a rear roller fixing part that is coupled to the second main body part and presses and supports a back of the slaughtered animal, wherein the second main body part is rotated with respect to the first main body part about the rotational shaft by operating the main cylinder.

The front roller fixing part may include a fixed frame coupled to the lower portion of the first main body part, an abdomen pressing roller part coupled to an end portion of the fixed frame, and an auxiliary cylinder that is coupled to a lower portion of the fixed frame and rotates the abdomen pressing roller part from the fixed frame, and when an auxiliary rod provided on the auxiliary cylinder extends, the abdomen pressing roller part may be rotated with respect to the fixed frame about a coupling shaft and press and support the abdomen of the slaughtered animal with a predetermined pressure.

The abdomen pressing roller part may include a pair of roller support plates coupled to the fixed frame and spaced a predetermined interval from each other, first auxiliary rollers that are each coupled to one of the roller support plates and in which an insertion space into which the rotary saw blade is inserted is formed, and a first pressing roller coupled to the roller support plate and disposed to be spaced apart from the first auxiliary roller, a stopper catch groove may be formed in the roller support plate to catch a fixing bar provided on the fixed frame so that a rotation range of the roller support plate is limited, and when the auxiliary rod extends, the roller support plate may be rotated with respect to the fixed frame so that the first pressing roller presses and supports the abdomen of the slaughtered animal.

The robot tool system may further include a plurality of spray nozzle assemblies coupled to the first main body part, wherein the spray nozzle assembly may include a first nozzle that is coupled to the first main body part and sprays washing water onto the rotary saw blade, a second nozzle formed to spray washing water onto a shatter-resistant plate coupled to the fixed frame under the first main body part, and a third nozzle that is coupled to an end portion of the first main body part and prevents frictional heat from being generated at a cut portion of the slaughtered animal during a process of spraying cold water onto the slaughtered animal and cutting the slaughtered animal.

The rear roller fixing part may include a torsion bar coupled to an end portion of the second main body part, a torsion spring of which one end is coupled to the second main body part and the other end is coupled to the torsion bar, a second pressing roller coupled to one end of the torsion bar and formed to press and support the back of the slaughtered animal, and a second auxiliary roller that is coupled to the other end of the torsion bar and presses and supports the back of the slaughtered animal together with the second pressing roller, the second pressing roller may be formed to press and support the back of the slaughtered animal with a predetermined pressure by the torsion spring, and in a state in which the second main body part is rotated with respect to the first main body part to cut the slaughtered animal, the second pressing roller may be disposed adjacent to the rotary saw blade, and the second auxiliary roller may be disposed adjacent to the first pressing roller provided on the front roller fixing part.

The second pressing roller may be provided as a pair of second pressing rollers that are spaced a predetermined interval from each other and may be formed in a cone shape having a diameter that increases toward an outer side of the torsion bar, and a plurality of slipping prevention parts arranged at a predetermined interval along a circumference of an inclined surface of the second pressing roller may be provided on the inclined surface.

A cutter part may be provided under one end of the first main body part, and the cutter part may be disposed at a front side of the rotary saw blade to cut a cutting start point between legs of the slaughtered animal, which is not cut by the rotary saw blade.

### [Advantageous Effects]

The effects of the above-described robot tool system for bisecting a slaughtered animal according to the present invention are as follows.

According to the present invention, the robot tool system for bisecting a slaughtered animal has a second main body part formed to be rotated with respect to a first main body part. In this way, when the process of bisecting a carcass is performed, in the robot tool system, a rotary saw blade bisects the slaughtered animal in a state in which a front roller fixing part provided on the first main body part presses and supports the abdomen of the slaughtered animal and a rear roller fixing part provided on the second main body part presses and supports the back of the slaughtered animal.

Since the robot tool system for bisecting a slaughtered animal is made with a simple structure, the process of bisecting a carcass can be simply performed.

It should be understood that the effects of the present invention are not limited to the above-described effects and include all effects inferrable from the configuration of the invention described in the detailed description or claims of the present invention.

### [Description of Drawings]

FIG. 1 is an exemplary view illustrating a state in which a robot tool system for bisecting a slaughtered animal according to one embodiment of the present invention is mounted on an automatic robot device.
FIG. 2 is a top perspective view illustrating the robot tool system for bisecting a slaughtered animal in an open state in which a first main body part and a second main body part are arranged straightly according to one embodiment of the present invention.
FIG. 3 is a bottom perspective view illustrating the robot tool system for bisecting a slaughtered animal in the open state in which the first main body part and the second main body part are arranged straightly according to one embodiment of the present invention.
FIG. 4 is a perspective view illustrating the robot tool system for bisecting a slaughtered animal in a closed state in which the second main body part is rotated with respect to the first main body part according to one embodiment of the present invention.
FIG. 5 is a top perspective view illustrating a front roller fixing part according to one embodiment of the present invention.
FIG. 6 is a bottom perspective view illustrating the front roller fixing part according to one embodiment of the present invention.
FIG. 7 is an operation state diagram of the front roller fixing part according to one embodiment of the present invention.
FIG. 8 is a perspective view of a rear roller fixing part according to one embodiment of the present invention.
FIG. 9 is an enlarged view illustrating main parts of a second pressing roller according to one embodiment of the present invention.
FIGS. 10 and 11 are schematic exemplary views illustrating a process of bisecting a carcass using the robot tool system for bisecting a slaughtered animal according to one embodiment of the present invention.

### [Modes of the Invention]

Hereinafter, the present invention will be described with reference to the accompanying drawings. However, the present invention may be implemented in various different forms and is not limited to embodiments described herein. In addition, in order to clearly describe the present disclosure in the drawings, components irrelevant to the description have been omitted, and throughout the specification, similar components have been denoted by similar reference numerals.

Throughout the specification, when a certain part is described as being "connected to" another part, it includes not only a case in which the certain part is "directly connected" to another part, but also a case in which the certain part is "indirectly connected" to another part with another member interposed therebetween. In addition, when the certain part is described as "including" a certain component, this means that the certain part may further include another component rather than precluding another component unless especially stated otherwise.

In the present invention, "above" and "under" mean being positioned above or under a target member, but do not necessarily mean being positioned above or under in the direction of gravity.

Hereinafter, embodiments of the present invention will be described in detail with reference to the accompanying drawings.

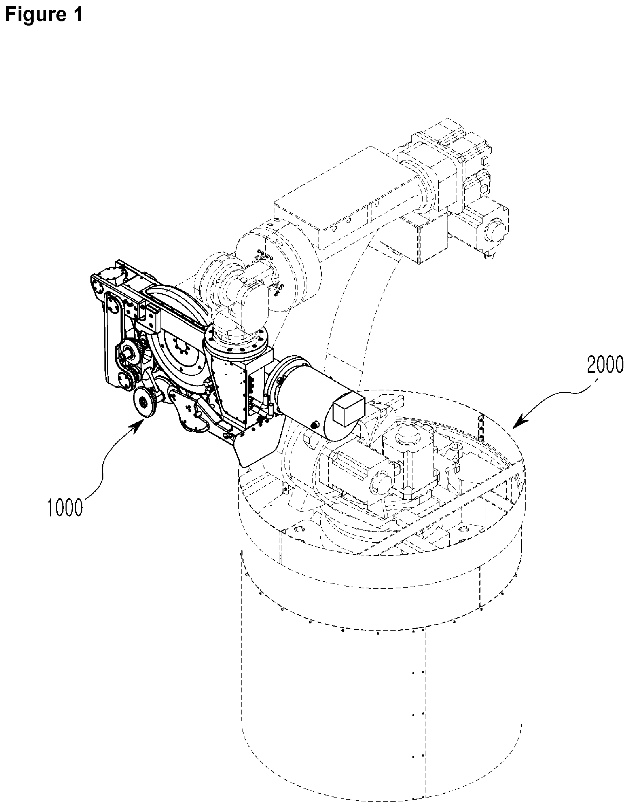

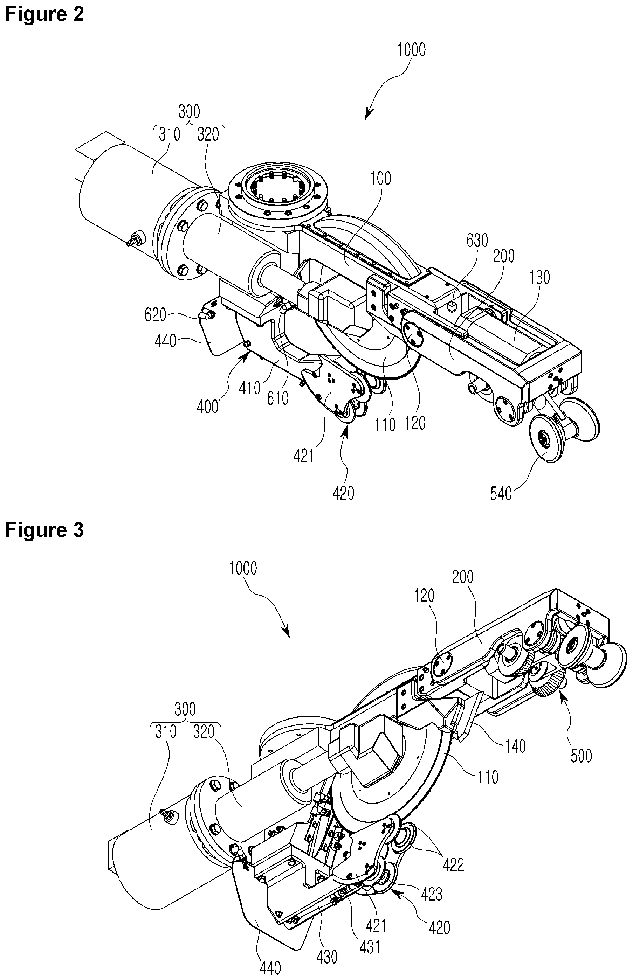

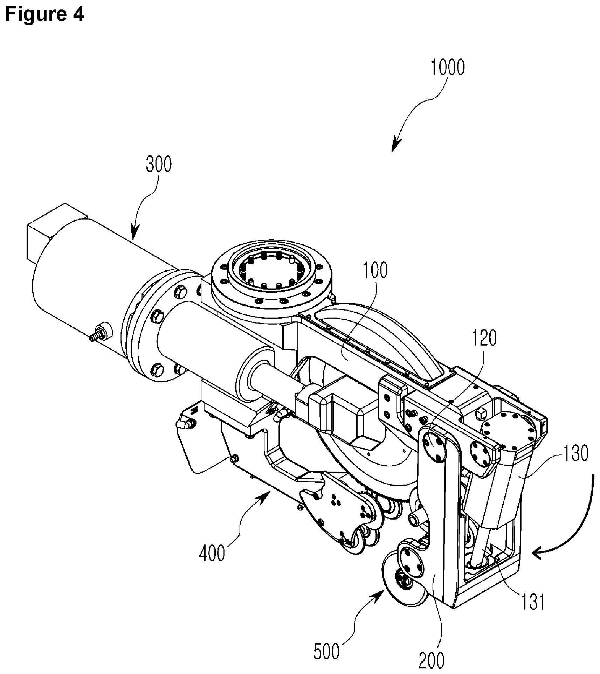

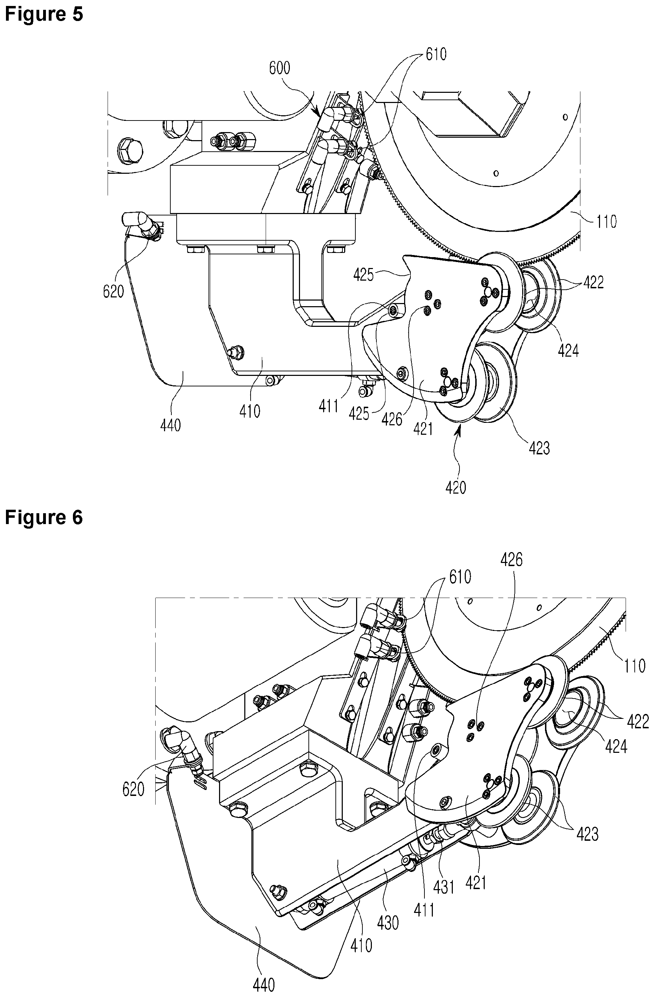

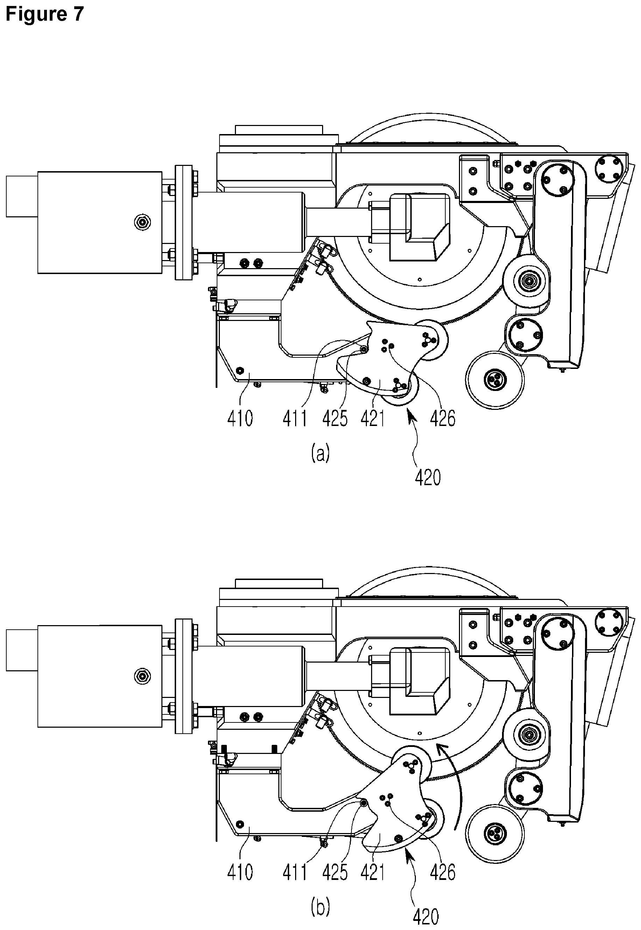

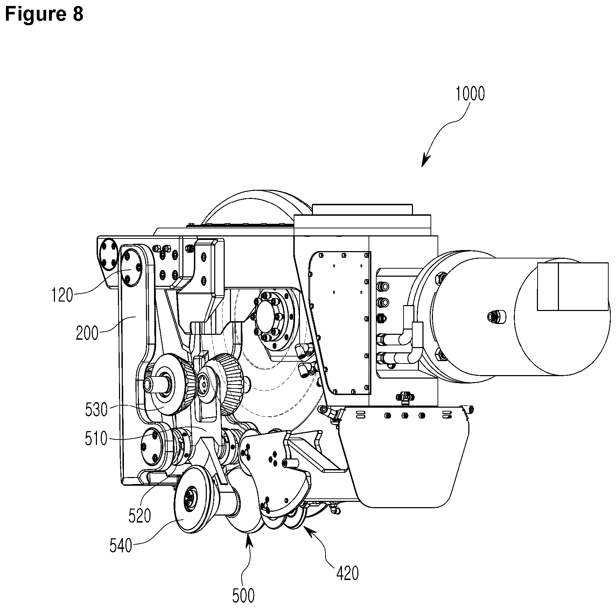

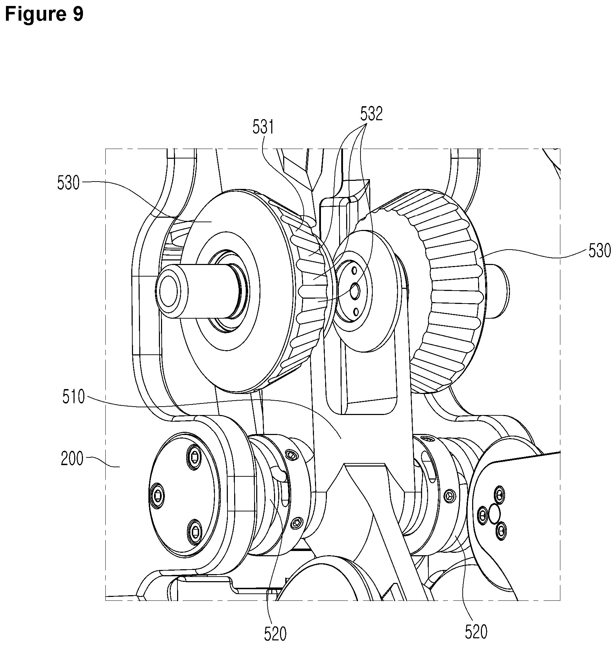

FIG. 1 is an exemplary view illustrating a state in which a robot tool system for bisecting a slaughtered animal according to one embodiment of the present invention is mounted on an automatic robot device, FIG. 2 is a top perspective view illustrating the robot tool system for bisecting a slaughtered animal in an open state in which a first main body part and a second main body part are arranged straightly according to one embodiment of the present invention, FIG. 3 is a bottom perspective view illustrating the robot tool system for bisecting a slaughtered animal in the open state in which the first main body part and the second main body part are arranged straightly according to one embodiment of the present invention, FIG. 4 is a perspective view illustrating the robot tool system for bisecting a slaughtered animal in a closed state in which the second main body part is rotated with respect to the first main body part according to one embodiment of the present invention, FIG. 5 is a top perspective view illustrating a front roller fixing part according to one embodiment of the present invention, FIG. 6 is a bottom perspective view illustrating the front roller fixing part according to one embodiment of the present invention, FIG. 7 is an operation state diagram of the front roller fixing part according to one embodiment of the present invention, FIG. 8 is a perspective view of a rear roller fixing part according to one embodiment of the present invention, and FIG. 9 is an enlarged view illustrating main parts of a second pressing roller according to one embodiment of the present invention.

As illustrated in FIGS. 1 to 9, a robot tool system 1000 for bisecting a slaughtered animal may include a first main body part 100, a second main body part 200, a power supply part 300, a front roller fixing part 400, and a rear roller fixing part 500. Hereinafter, the robot tool system 1000 for bisecting a slaughtered animal will be simply described as the robot tool system 1000.

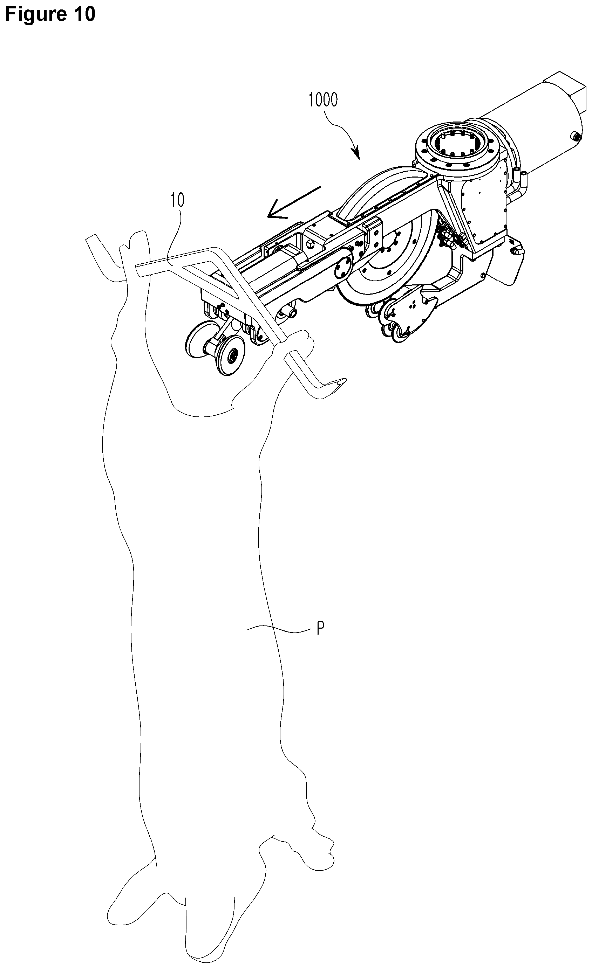

The robot tool system 1000 is detachably attached to an automatic robot device 2000. The robot tool system 1000 may bisect a slaughtered animal P (see FIG. 10) while coupled to the automatic robot device 2000.

In the present invention, an example in which the slaughtered animal P to be bisected is a pig will be described. Here, the animal slaughtered through the robot tool system 1000 is not necessarily limited to a pig and may be any of various slaughtered animals P such as a cow other than a pig.

The automatic robot device 2000 and the robot tool system 1000 are configured to receive scan information of the slaughtered animal P from a scanning module (not illustrated) and bisect the slaughtered animal P based on the scan information of the slaughtered animal P provided from the scanning module. Here, the scan data acquired through the scanning module may be generated as a three-dimensional image of the slaughtered animal P through an image conversion process.

Such a scanning module may be provided as, for example, a two-dimensional light detection and ranging (LiDAR) image, and the scanning module may be provided as a three-dimensional scanner, and any device may be used as the scanning module as long as it may acquire more accurate scan data of the slaughtered animal P.

Meanwhile, the first main body part 100 and the second main body part 200 form the overall exterior of the robot tool system 1000.

The first main body part 100 has a rotary saw blade 110 for cutting the slaughtered animal P.

The rotary saw blade 110 is rotated by receiving power from the power supply part 300. That is, when the process of bisecting a carcass is performed on the slaughtered animal P, the rotary saw blade 110 may bisect the slaughtered animal P into left and right parts along the central spine line of the sacrum (tail bone), the sacrum, the coccyx (lumbar vertebrae), the thoracic vertebrae (back bone), and the cervical vertebrae (neck bone) to have two half-carcasses that are bilaterally symmetrical.

In addition, the power supply part 300 for providing rotational power of the rotary saw blade 110 may include a motor 310 and a power transmission deceleration part 320. That is, the power of the motor 310 may be transmitted to the rotary saw blade 110 through the power transmission deceleration part 320. Here, the power transmission deceleration part 320 is configured to increase torque when transmitting power to the rotary saw blade 110.

Meanwhile, the front roller fixing part 400 is coupled to a lower portion of the first main body part 100. The front roller fixing part 400 is formed to press and support the abdomen of the slaughtered animal P moved by a hanger 10 (see FIG. 10) while caught on the hanger.

The front roller fixing part 400 may include a fixed frame 410, an abdomen pressing roller part 420, and an auxiliary cylinder 430.

Here, the fixed frame 410 is coupled to the lower portion of the first main body part 100 and is configured to support the abdomen pressing roller part 420.

In addition, the auxiliary cylinder 430 is coupled to a lower portion of the fixed frame 410. The auxiliary cylinder 430 is configured to rotate the abdomen pressing roller part 420 to the fixed frame 410. That is, an auxiliary rod 431 provided on the auxiliary cylinder 430 is stretchable (to extend or shrink), and when the auxiliary rod 431 extends, the abdomen pressing roller part 420 is rotated with respect to the fixed frame 410 about a coupling shaft 426 coupled to the fixed frame 410, and first pressing rollers 423 provided on the abdomen pressing roller part 420 are formed to press and support the abdomen of the slaughtered animal P with a predetermined pressure.

Here, the auxiliary cylinder 430 may be, for example, provided as a pneumatic cylinder and formed to provide a predetermined pressing force to the first pressing rollers 423. For example, when a force greater than the predetermined pressing force is applied to the first pressing rollers 423 in the process in which the first pressing rollers 423 press the abdomen of the slaughtered animal P with the predetermined pressing force, the auxiliary rod 431 may shrink and be formed to press the slaughtered animal P in a customized manner along an exterior of the slaughtered animal P.

In addition, the abdomen pressing roller part 420 for pressing and supporting the abdomen of the slaughtered animal P may include roller support plates 421, first auxiliary rollers 422, and the first pressing rollers 423.

Here, the roller support plates 421 are spaced a predetermined interval from each other and are coupled to the fixed frame 410. The roller support plates 421 supports the first auxiliary rollers 422 and the first pressing rollers 423.

In addition, the first auxiliary rollers 422 are each coupled to one of the roller support plates 421. In this way, a pair of first auxiliary rollers 422 are spaced apart from each other to form an insertion space 424. Accordingly, during the process of bisecting a carcass, the rotary saw blade 110 may be inserted into the insertion space 424 of the first auxiliary rollers 422. In this way, during the process of bisecting a carcass, a central axis of the first pressing roller 423 is positioned ahead a central axis of the first auxiliary roller 422 with respect to a virtual vertical line. That is, the process of bisecting a carcass of the slaughtered animal P is performed in a state in which the central axis of the first pressing rollers 423 are positioned closer to the abdomen of the slaughtered animal P than the central axis of the first auxiliary roller 422.

In addition, a stopper catch groove 425 that limits a rotation range of the roller support plate 421 is formed in the roller support plate 421. The stopper catch groove 425 catches a fixing bar 411 provided on the fixed frame 410 during the process of rotating the roller support plate 421 with respect to the fixed frame 410. Accordingly, the rotation range of the roller support plate 421 may be limited by the fixing bar 411 and the stopper catch groove 425.

Meanwhile, the second main body part 200 is rotated with respect to the first main body part 100.

When the process of bisecting a carcass of the slaughtered animal P is performed, the second main body part 200 may be rotated with respect to the first main body part 100 and positioned on the back of the slaughtered animal P.

The second main body part 200 may be coupled to a rotational shaft 120 provided on an end portion side of the first main body part 100, and the second main body part 200 may be rotated with respect to the first main body part 100 about the rotational shaft 120 by operating the main cylinder 130. For example, when a main rod 131 provided on the main cylinder 130 extends in a state in which the first main body part 100 and the second main body part 200 are arranged straightly before the process of bisecting a carcass of the slaughtered animal P is performed, the second main body part 200 may be rotated with respect to the first main body part 100. On the contrary, when the main rod 131 provided on the main cylinder 130 shrinks, the second main body part 200 may be rotated to be straightly arranged with the first main body part 100.

In this way, the main cylinder 130 for selectively controlling the rotation of the second main body part 200 may be provided as, for example, a pneumatic cylinder, and one end of the main cylinder 130 may be coupled to an end portion of the first main body part 100, and the other end of the main rod 131 provided on the main cylinder 130 may be coupled to the second main body part 200 so that the second main body part 200 may be rotated with respect to the first main body part 100 by the extension and shrinkage of the main rod 131.

Meanwhile, the rear roller fixing part 500 that presses and supports the back of the slaughtered animal P is coupled to the second main body part 200 during the process of bisecting a carcass.

The rear roller fixing part 500 may include a torsion bar 510, torsion springs 520, second pressing rollers 530, and second auxiliary rollers 540.

Here, the torsion bar 510 is coupled to an end portion of the second main body part 200 and rotated with respect to the second main body part 200.

In addition, the torsion springs 520 are formed to press the back of the slaughtered animal P with a predetermined pressing force when the second pressing roller 530 presses the back of the slaughtered animal P.

One end of the torsion spring 520 is coupled to the second main body part 200, and the other end is coupled to the torsion bar 510 so that the torsion spring 520 provides a predetermined pressing force or more to the second pressing roller 530. The torsion spring 520 is formed so that the second pressing roller 530 presses the back of the slaughtered animal P with a predetermined pressing force like the auxiliary cylinder 430, and when the pressing force applied from the outside to the second pressing roller 530 is greater than the pressing force of the torsion spring 520, the torsion spring 520 may be compressed and formed to press the slaughtered animal P in a customized manner along the exterior of the slaughtered animal P. That is, since the second pressing roller 530 and the second auxiliary roller 540 press the back of the slaughtered animal P and moves along the spine line of the slaughtered animal P, the torsion spring 520 performs the same function as a suspension provided on a vehicle that moves on a rough terrain, for example.

Here, the second pressing roller 530 is coupled to one end of the torsion bar 510. A pair of second pressing rollers 530 are spaced apart from each other, and when the process of bisecting a carcass of the slaughtered animal P is performed, the second pressing rollers 530 press and support the back of the slaughtered animal P with a predetermined pressure.

When the rotary saw blade 110 bisects the slaughtered animal P, the second pressing rollers 530 press and support the back of the slaughtered animal P while disposed adjacent to the rotary saw blade 110. The second pressing rollers 530 prevent the shaking of the slaughtered animal P to support and press the slaughtered animal P so that the rotary saw blade 110 precisely cuts the slaughtered animal P along a preset cutting line.

The second pressing roller 530 may be formed in a cone shape having a diameter that increases toward an outer side of the torsion bar 510 so that the second pressing roller 530 having the cone shape can stably press and support the spine line of the slaughtered animal P. In addition, slipping prevention parts 532 may be provided on an inclined surface 531 of the second pressing roller 530 having the cone shape. The slipping prevention parts 532 may be formed at a predetermined interval along the circumference of the inclined surface 531, thereby preventing the slipping of the slaughtered animal P in the process in which the second pressing rollers 530 press and support the slaughtered animal P. Accordingly, the second pressing rollers 530 can stably support and press the slaughtered animal P.

In addition, the second auxiliary roller 540 is coupled to the other end of the torsion bar 510 to press and support the back of the slaughtered animal P together with the second pressing roller 530. The second auxiliary rollers 540 assist the second pressing rollers 530 when the second pressing rollers 530 press and support the back of the slaughtered animal P, thereby minimizing the shaking of the slaughtered animal P.

When the process of bisecting a carcass is performed, the second auxiliary rollers 540 are disposed adjacent to the first pressing rollers 423 provided on the front roller fixing part 400 to stably press and support front and rear portions of the slaughtered animal P.

Meanwhile, a cutter part 140 is provided under one end of the first main body part 100. The cutter part 140 is disposed at a front side of the rotary saw blade 110. The cutter part 140 is configured to cut, for example, a start point between legs of the slaughtered animal P that may not be cut by the rotary saw blade 110. In this way, after the initial cutting is performed by the cutter part 140, the rotary saw blade 110 may perform cutting work along the spine line of the slaughtered animal P.

Meanwhile, the robot tool system 1000 is provided with a spray nozzle assembly 600.

The spray nozzle assembly 600 may include a first nozzle 610, a second nozzle 620, and a third nozzle 630.

Here, the first nozzle 610 is fixedly installed to the first main body part 100 and formed to spray washing water onto the rotary saw blade 110. The number of first nozzles 610 is not limited to a specific number and may be provided in various numbers.

The first nozzle 610 is formed to, for example, spray lukewarm water onto the rotary saw blade 110 to remove flesh of the slaughtered animal P attached to the rotary saw blade 110. That is, it is possible to prevent various foreign substances, such as flesh, bones, etc. of the slaughtered animal P, from drying and sticking to the rotary saw blade 110. Accordingly, the washing work of the rotary saw blade 110 can be convenient, and the rotary saw blade 110 can be hygienically managed.

In addition, the second nozzle 620 is formed to spray washing water onto a shatter-resistant plate 440 coupled to the fixed frame 410. The second nozzle 620 is fixedly installed on the shatter-resistant plate 440. Here, the shatter-resistant plate 440 prevents flesh, bones, and the like shattering from the slaughtered animal P from shattering externally during the process of bisecting the slaughtered animal P while the rotary saw blade 110 rotates clockwise.

Here, the second nozzle 620 sprays washing water onto the shatter-resistant plate 440 to prevent various foreign substances, such as flesh, bones, etc. of the slaughtered animal P, from drying and sticking to the shatter-resistant plate 440.

In addition, the third nozzle 630 is provided on the end portion of the first main body part 100. The third nozzle 630 sprays cold water onto the slaughtered animal P during the process of performing the process of bisecting a carcass. Accordingly, the rotary saw blade 110 prevents frictional heat from being generated at a cut portion of the slaughtered animal P during the process of cutting the slaughtered animal P.

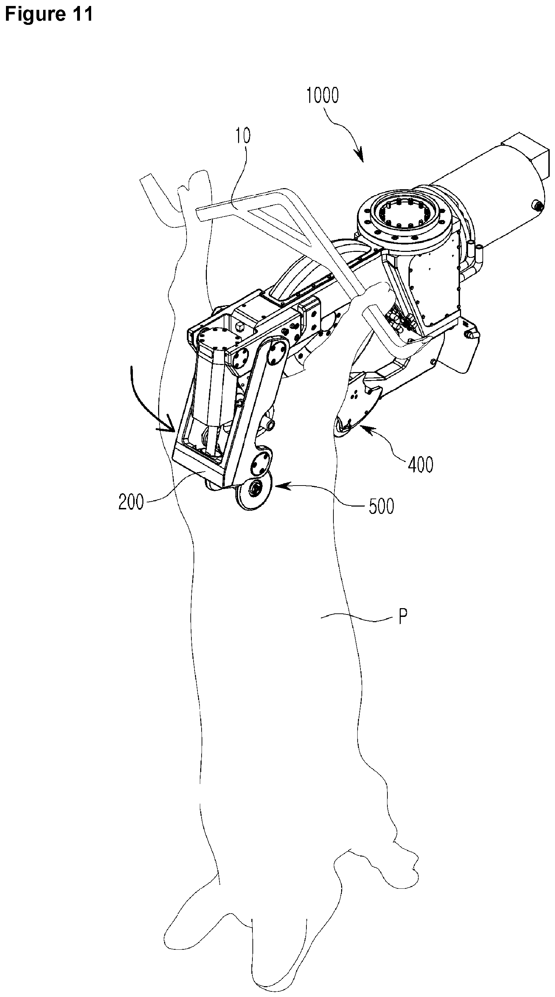

FIGS. 10 and 11 are schematic exemplary views illustrating a process of bisecting a carcass process using the robot tool system for bisecting a slaughtered animal according to one embodiment of the present invention.

Schematically describing the operation process of the robot tool system 1000 with reference to FIGS. 10 and 11, first, when work information on the slaughtered animal P is transmitted from the scanning module, the spray nozzle assembly 600 sprays water to a preset specified position.

Next, the robot tool system 1000 enters between the legs of the slaughtered animal P hanging on the hanger 10. In this case, the first main body part 100 and the second main body part 200 enter between the legs of the slaughtered animal P while arranged straightly. In such a process, the cutter part 140 provided on the first main body part 100 cuts a cutting start point positioned between the legs of the slaughtered animal P that the rotary saw blade 110 may not reach. In this case, in the process in which the robot tool system 1000 enters between the legs of the slaughtered animal P, the rotary saw blade 110 is rotated by the power supply part 300.

Next, in a state in which the robot tool system 1000 enters the required position, the second main body part 200 is rotated with respect to the first main body part 100 by operating the main cylinder 130. In this case, the abdomen pressing roller parts 420 coupled to the first main body part 100 presses the abdomen of the slaughtered animal P, and the second pressing rollers 530 and the second auxiliary rollers 540 that are coupled to the second main body part 200 press the back of the slaughtered animal P.

Next, the robot tool system 1000 cuts the slaughtered animal P while moving from the crotch side to the head side of the slaughtered animal P along a predetermined cutting line. Even in such a process, the spray nozzle assembly 600 continuously sprays water to a preset position.

Finally, after the process of bisecting a carcass of the slaughtered animal P is completed, the first main body part 100 and the second main body part 200 are arranged straightly e and return to their initial states. In this way, in a state in which the process of bisecting a carcass is completed, the operations of the spray nozzle assembly 600 and the rotary saw blade 110 are stopped.

However, this is only an exemplary embodiment of the present invention, and the scope of the present invention is not limited by the description scope of this embodiment.

The above description of the present invention is for illustrative purpose, and those skilled in the art to which the present invention pertains will be able to understand that the present invention may be easily modified in other specific forms without changing the technical spirit or essential features thereof. Therefore, it should be understood that the above-described embodiments are illustrative and not restrictive in all respects. For example, each component described in a singular form may be implemented separately, and likewise, components described as being implemented separately may also be implemented in a combined form.

The scope of the present invention is defined by the appended claims, and all changes or modifications derived from the meaning and scope of the claims and equivalent concepts thereof should be construed as being included in the scope of the present invention.

## Claims

1. A robot tool system (1000) for bisecting a slaughtered animal, comprising:
a first main body part (100) having a rotary saw blade (110) that cuts a slaughtered animal;
a power supply part (300) configured to provide power to the rotary saw blade;
a front roller fixing part (400) that is coupled to a lower portion of the first main body part and presses and supports an abdomen of the slaughtered animal;
a second main body part (200) coupled to the first main body part by a rotational shaft (120) and having a main cylinder (130); and
a rear roller fixing part (500) that is coupled to the second main body part and presses and supports a back of the slaughtered animal,
wherein the second main body part is rotated with respect to the first main body part about the rotational shaft by operating the main cylinder.

2. The robot tool system (1000) of claim 1, wherein the front roller fixing part (400) includes:
a fixed frame (410) coupled to the lower portion of the first main body part (100);
an abdomen pressing roller part (420) coupled to an end portion of the fixed frame; and
an auxiliary cylinder (430) that is coupled to a lower portion of the fixed frame and rotates the abdomen pressing roller part from the fixed frame, and
when an auxiliary rod (431) provided on the auxiliary cylinder extends, the abdomen pressing roller part is rotated with respect to the fixed frame about a coupling shaft (426) and presses and supports the abdomen of the slaughtered animal with a predetermined pressure.

3. The robot tool system (1000) of claim 2, wherein the abdomen pressing roller part (420) includes:
a pair of roller support plates (421) coupled to the fixed frame (410) and spaced a predetermined interval from each other;
first auxiliary rollers (422) that are each coupled to one of the roller support plates and in which an insertion space (424) into which the rotary saw blade (110) is inserted is formed; and
a first pressing roller (423) coupled to the roller support plate and disposed to be spaced apart from the first auxiliary roller,
a stopper catch groove (425) is formed in the roller support plate to catch a fixing bar (411) provided on the fixed frame so that a rotation range of the roller support plate is limited, and
when the auxiliary rod (431) extends, the roller support plate is rotated with respect to the fixed frame so that the first pressing roller presses and supports the abdomen of the slaughtered animal.

4. The robot tool system (1000) of any of claims 1-3, further comprising a plurality of spray nozzle assemblies (600) coupled to the first main body part (100),
wherein the spray nozzle assembly includes:
a first nozzle (610) that is coupled to the first main body part (100) and sprays washing water onto the rotary saw blade (110);
a second nozzle (620) formed to spray washing water onto a shatter-resistant plate (440) coupled to the fixed frame (410) under the first main body part; and
a third nozzle (630) that is coupled to an end portion of the first main body part and prevents frictional heat from being generated at a cut portion of the slaughtered animal during a process of spraying cold water onto the slaughtered animal and cutting the slaughtered animal.

5. The robot tool system (1000) of any of claims 1-4, wherein the rear roller fixing part (500) includes:
a torsion bar (510) coupled to an end portion of the second main body part (200);
a torsion spring (520) of which one end is coupled to the second main body part (200) and the other end is coupled to the torsion bar;
a second pressing roller (530) that is coupled to one end of the torsion bar and presses and supports the back of the slaughtered animal; and
a second auxiliary roller (540) that is coupled to the other end of the torsion bar and presses and supports the back of the slaughtered animal together with the second pressing roller,
the second pressing roller is formed to press and support the back of the slaughtered animal with a predetermined pressure by the torsion spring, and
in a state in which the second main body part is rotated with respect to the first main body part (100) to cut the slaughtered animal, the second pressing roller is disposed adjacent to the rotary saw blade (110), and the second auxiliary roller is disposed adjacent to the first pressing roller (423) provided on the front roller fixing part (400).

6. The robot tool system (1000) of claim 5, wherein the second pressing roller (530) is provided as a pair of second pressing rollers that are spaced a predetermined interval from each other and formed in a cone shape having a diameter that increases toward an outer side of the torsion bar (510), and
a plurality of slipping prevention parts (532) arranged at a predetermined interval along a circumference of an inclined surface of the second pressing roller are provided on the inclined surface.

7. The robot tool system (1000) of any of claims 1-6, wherein a cutter part (140) is provided under one end of the first main body part (100), and
the cutter part is disposed at a front side of the rotary saw blade (110) to cut a cutting start point between legs of the slaughtered animal, which is not cut by the rotary saw blade.
